# EUROPEAN PATENT SPECIFICATION

(11) **EP 1 212 890 B1**
(45) Date of publication and mention of the grant of the patent: **09.01.2008**
(21) Application number: 00960542.9
(22) Date of filing: 28.08.2000
(51) Int. Cl.: H04M 15/00

(54) **COLLECTING CHARGING DATA IN A TELECOMMUNICATIONS SYSTEM**
GEBÜHRENSAMMLUNG IN EINEM TELEKOMMUNIKATIONSSYSTEM
COLLECTE DE DONNEES DE CHARGEMENT DANS UN SYSTEME DE TELECOMMUNICATIONS

(30) Priority: 18.09.1999 GB 9922040
(43) Date of publication of application: 12.06.2002
(73) Proprietor: TELEFONAKTIEBOLAGET LM ERICSSON (publ), 164 83 Stockholm (SE)
(72) Inventor: SAVOLAINEN, Jarmo, FIN-21350 Ilmarinen (FI)
(74) Representative: Lind, Robert
(86) International application number: PCT/EP2000/008405
(87) International publication number: WO 2001/022746

(56) References cited:
- WO-A-99/34590
- US-A- 5 511 113
- US-A- 5 557 655
- US-A- 5 796 790

## Description

### Field of the Invention

The present invention relates to the collection of charging data in a telecommunications system and in particular, though not necessarily, to the collection of charging data in a mobile telecommunications system.

### Background to the invention

In conventional fixed line telephone networks, call charges have traditionally been based on a limited number of charging elements, namely the duration of a call, a call tariff which is selected on the basis of the location of the called party, and the time (and day) at which the call is made. Recently, more complex charging algorithms have been introduced which take into account charging elements such as the calling plan to which the calling party subscribes. Mobile telephone network operators have based call charges on similar factors, but have additionally relied upon the location of the calling party if that party is allowed to roam into "foreign" mobile networks. If the called party is also a mobile subscriber, then the charge may also take into account the location of the called party.

The growth in telecommunication services including the availability of text messaging, data connections, and of course the Internet, has lead operators to introduce even more complex charging algorithms. In the near future, these algorithms are likely to become even more complex with the introduction of services such as the General Packet Radio Service (GPRS) which is an enhancement to GSM (Phase 2).

In a typical mobile telephone network, charging information may be collected at one or more charging functions (which may be embodied in a discrete node or which may be implemented in some other node through which user traffic or traffic control signals flow). For example, a charging function may be associated with the Mobile Switching Centre (MSC) to which a calling subscriber is currently registered, with another charging function being associated with a Gateway MSC (GMSC) through which the subscriber's call can be routed. Another example of a node which may have a charging function associated with it is an Intelligent Network node which handles the redirection of calls. All of the charging information relating to a specific call is collected at a central billing node of the network where it can be used to generate subscribers' bills.

When a subscriber is roaming in a foreign network, the billing node of the home network collects charging information from a billing node of the foreign network, which in turn collects information from the charging functions of the foreign network. In current networks, charging information is passed between networks via a charge broker (or clearing house), although in future networks the information may be passed directly and in real time or near real time.

Whilst the new charging algorithms may be good news for subscribers and operators insofar as they result in charges which accurately reflect the uses of the networks made by the subscribers, they will, assuming current charging technology, result in a large increase in the volume of charging related signalling in telecommunications networks. Signalling resources are often scarce and signalling congestion may result in the loss of charging information and/or the termination of associated call connections and data. US 5,511,113 discloses a well-known mechanism for collecting charging information from two nodes of a telecommunications network. The charging information generated from the two nodes together define the total cost of the call, but does not define the type of data that must be collected in order to charge the call.

### Summary of the Present Invention.

The inventor of the present invention has realised that if charging functions are required to generate charging information which satisfies all possible charging requirements (or at least as much of this information which the charging nodes or their associated serving nodes are capable of generating), and that it is necessary to send this information in its entirety to other billing nodes regardless of the requirements of the receiving billing nodes, signalling networks are likely to become severely congested with large volumes of often redundant information.

It is an object of the present invention to overcome or at least mitigate the expected charging related signalling congestion. This and other objects are achieved at least in part by combining charging requirements and/or capabilities at charging functions and generating and/or transmitting only that charging information which is available and required. Use is made of charging elements which may define *inter alia* charge related information to be collected, the destination to which collected information is to be sent, and when the information is to be sent.

According to a first aspect of the present invention there is provided a method of determining which charging elements should be acted upon at a charging function of a telecommunications system during the use of a telecommunications service by a subscriber, the method comprising, prior to the subscriber being granted access to said service, the steps of:
identifying a set of charging elements associated with the charging function (7);
identifying a set of charging elements associated with at least one additional node or charging function (4); and
combining the identified sets of charging elements at said first mentioned charging function to obtain a set of charging elements which require to be acted upon at the first mentioned charging function during use of said service,
whereby the resulting set of charging elements define the charge information which must be collected during access of the service in order to bill the subscriber.

Embodiments of the present invention result in the generation and transmission of only that charging information which is actually required for charging the subscriber and/or which is required for other accounting purposes, e.g. inter-network accounting. Embodiments may also result in charging information only being sent to destinations where the information is required and only at a time when the information is actually needed.

Preferably, said set of charging elements associated with the first mentioned charging function define the capabilities and/or requirements of a node which is associated with the charging function. For example, this node may be a Mobile Switching Centre (MSC), a Gateway MSC, or the like through which user call traffic or call related signalling traffic flows.

Preferably, the first mentioned charging function is located at a node of the telecommunications system through which call related traffic passes (e.g. user traffic or traffic control signals). For example, the node may be a Mobile Switching Centre (MSC), Gateway GPRS Support Node, Gateway MSC, or the like. The first mentioned charging function may be located within a subscriber's home network or in a foreign network in the event of a roaming subscriber.

It will be appreciated that for a given telecommunications service initiated by a subscriber, the method of the present invention may be carried out at a plurality of locations in a subscriber's home network and/or in a foreign network. Charging information collected by one or more charging functions in respect of a service may be forwarded to a billing node of a home/foreign network. In particular, charging information may be forwarded to a billing node of a subscriber's home network from charging functions located both in the home network and in a foreign access network.

The at least one additional node or charging function may be located at a Home Location Register (HLR), a Visitor Location Register (VLR), or a gateway node of a mobile telecommunications network. In the case of a roaming subscriber, a set of charging elements may be identified for the subscriber from the HLR of the subscriber's home network as well as for the VLR of the visited foreign network (and any used gateway node).

Where the home network and foreign networks are cellular radio telecommunications networks, the step of identifying a set of charging elements for a charging function of the home network preferably comprises sending the set from a Home Register of the home network to the first mentioned charging function. More preferably, the Home Register maintains a record of the subscribers of the home network together with respective charging element sets.

An additional node for which a set of charging elements is identified is an access node which is located in the access network and which is responsible for enabling the subscriber to access said telecommunications service. This access node may be, for example, a Mobile Switching Centre (MSC) in a GSM network or a Serving GPRS Support Node (SGSN) in GPRS network.

Preferably, each set of charging elements is identified by way of a binary sequence where each bit of the sequence indicates whether a charging element is set on or off. More preferably, the step of combining the identified sets of charging element identifications at said charging function comprises logically combining the respective binary sequences. A logical OR operation is performed to combine sets corresponding to charging requirements, whilst a logical AND operation is performed to combine a set corresponding to a charging requirement with a set corresponding to a charging capability.

According to a second aspect of the present invention there is provided a method of collecting charging information at a charging function of a telecommunications system, the method comprising:
determining which charging elements should be acted upon at the charging function, for the purpose of charging a subscriber for the use of a telecommunications service, using the method of the above first aspect of the present invention; and
subsequently acting upon the determined elements for the said service.

Where the charging function is located within an access network, and the subscriber is a roaming subscriber making use of the access network, the method preferably comprises sending at least some of the charging information collected in respect of charging elements to a billing node of the subscriber's home network.

According to a third aspect of the present invention there is provided apparatus (7) for use in a telecommunications system to collect charging information, the charging information being collected in respect of a telecommunications service used by a subscriber, the apparatus comprising:
first processing means for identifying a set of charging elements associated with the apparatus;
second processing means for identifying a set of charging elements associated with at least one additional apparatus (4) for use in a telecommunications system to collect charging information; and
third processing means for combining the identified sets of charging elements at said apparatus, prior to the subscriber being granted access to said service, to obtain a set of charging elements which require to be acted upon at the apparatus,
whereby the resulting set of charging elements define the charge information which must be collected during access of the service in order to bill the subscriber.

### Brief Description of the Drawings

Figure 1 illustrates schematically a telecommunications system; and
Figure 2 is a flow diagram illustrating a method of determining charging elements at a charging function of the system of Figure 1.

### Detailed Description of a Preferred Embodiment

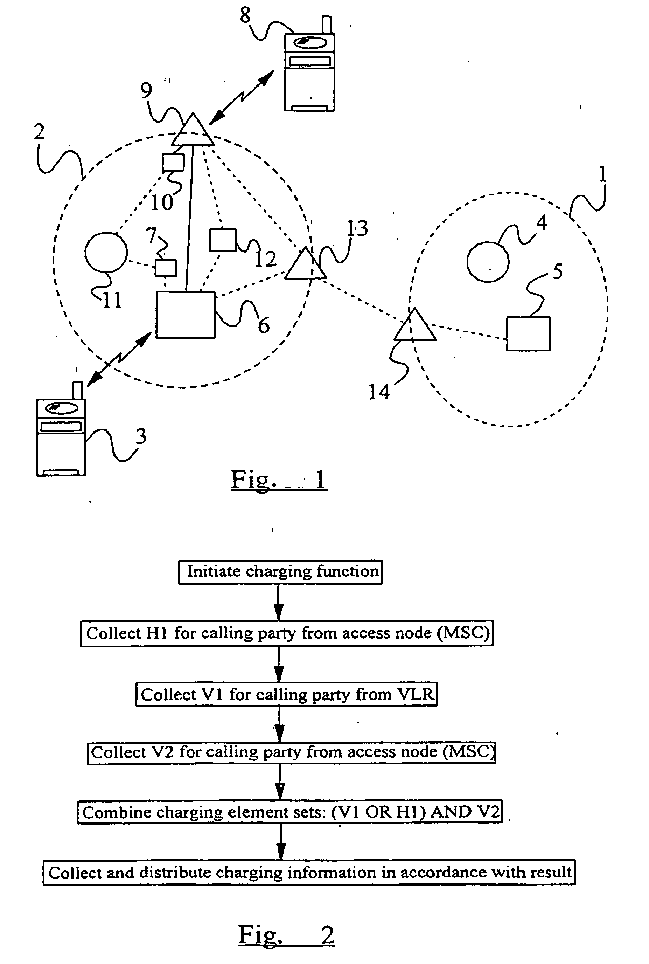

There is illustrated in Figure 1 a telecommunications system comprising two Public Land Mobile Networks (PLMNs) 1,2, For the purpose of illustration, these networks may be GSM networks. A first of the networks 1 is the home network (HPLMN) of a mobile subscriber 3 and comprises a billing node 4 which collects charging information for the purpose of billing the network's subscribers including subscriber 3. The home network 1 also comprises a Home Location Register (HLR) 5 which maintains a record of all of the network's subscribers together with details of their current status and location. The HLR 5 additionally attaches to each subscriber a set of charging elements H1. This set is in practice identified by a binary sequence, each bit of which indicates whether a corresponding charging element is set ON or OFF for the subscriber. Each element may have associated with it one or more parameters.

Charging elements might include for example; a data volume element which when set to ON indicates that a data call made by the subscriber is to be billed on the basis of the volume of data transferred; a pre-paid element which indicates whether or not the subscriber has a pre-paid subscription requiring real time debiting; and an Advice of Charge element indicating whether or not the subscriber requires Advice of Charge (AoC) information sent to his terminal. Other charging elements might relate to the Quality of Service selected by a subscriber and the destination of a call placed to an external data network. Charging elements may identify where collected information is to be sent and at what time intervals, e.g. real-time or upon call termination. A subscriber may be associated with two or more charging element sets. For example, one set may be selected for voice calls with another set being selected for data calls.

The second of the networks 2 illustrated in Figure 1 is considered a Visited PLMN (VPLMN) when the mobile subscriber 3 is roaming and is registered with a Mobile Switching Centre (MSC) 6 of the VPLMN 2 (as is illustrated in Figure 1). Associated with the MSC 6 is a charging function (or node) 7 which is designed to collect charging information in respect of calls handled by the MSC 6. More particularly, the charging information collected by the charging function 7 consists of data for each of a number of charging elements. Charging functions similar to the function 7 are additionally associated with other nodes, both within the VPLMN 2 and the HPLMN 1, and which are required to collect charging element data required to bill a subscriber. For example, where a call (from the subscriber 3) is routed to a mobile subscriber 8 via a Gateway MSC 9 of the VPLMN 2, charging element data will be generated by a charging function 10 of the GMSC. Typically, upon completion of a call (or other network service), charging element data is transferred from the various charging functions to a central billing node 11 of the VPLMN 2. Thereafter, the information is passed to the billing node of the HPLMN 1 (for example via a clearing house).

The MSC 6 of the VPLMN 2 retains a set of charging elements V2 which define the charging elements which the MSC 6 is capable of acting upon. In addition, a register of visiting mobile subscribers is maintained in a Visitor Location Register (VLR) 12, with each visitor being allocated a binary sequence V1 representing the set of charging elements required by the VPLMN 2. This record is set up upon registration of the subscriber 3 with the VPLMN 2. Upon registration of a new roaming subscriber, the MSC 6 requests (via gateway nodes 13,14) subscriber information from the home network's HLR 5. This information includes the charging element identification set H1 allocated to the subscriber 3 by the HPLMN 1

When the mobile subscriber 3 initiates a service (e.g. a telephone call, data call, Short Message Service) using the VPLMN 2 as its access network, the serving MSC 6 notifies the charging function 7 of the requested service. The MSC 6 sends to the charging function 7 the charging element identification set H1 allocated to the subscriber 3 by the HPLMN 1, as well as the set of charging elements V1 for the subscriber 3 (obtained from the VLR 12) and the set of charging elements V2 defining the capabilities of the MSC 6. Thereafter, the charging function 7 performs a logical OR operation on the two charging element identification sets H1 and V1 to obtain a binary sequence identifying the complete set of required charging elements. The result of the first OR operation is then combined with the set of capabilities V2 using a logical AND operation, i.e. (H1 OR V1) AND V2. The result is a binary sequence identifying which of the required charging elements can be provided.

After the final binary sequence is derived, this is sent to the serving MSC 6 such that the MSC 6 knows what charging information it must provide to the charging node 7. It will be appreciated that the volume of charging element information sent to the charging node 7 is likely to reduced, compared to the situation where the MSC 6 does not know what information must be sent to the charging node 7. Furthermore, the charging node 7 need only send to the charging node 4 of the HPLMN 1 the charging element data identified in the sequence H1, thus further reducing the volume of charging related signalling traffic.

Figure 2 is a flow diagram further illustrating the method of collecting charging information at the charging function 7 for a scenario involving a call between two roaming mobile subscribers 3,8.

A similar process to that described above may be carried out for the subscriber 3 at the charging function 10 in order to collect and distribute charging information relating to traffic passing through the GMSC 9, e.g. (H1 OR V1) AND V3, where V3 represents the charging element (capability) identification set for the GMSC 9. The process may also be carried out to determine a charging element set at the charging function 10 (or 7) for the subscriber 8.

It will be appreciated by the person of skill in the art that various modifications may be made to the above described embodiment without departing from the scope of the present invention. For example, the invention may be used in a GPRS network of a GSM Phase 2 network. The invention may also be used in third generation systems such as UMTS and in fixed line networks. It will also be appreciated that whilst various components of the telecommunications, such as the charging function and GMSC, have been illustrated as separate nodes, these components may be implemented logically, e.g. in a shared node.

## Claims

1. A method of determining which charging elements should be acted upon at a charging function of a telecommunications system during the use of a telecommunications service by a subscriber, the method comprising, prior to the subscriber being granted access to said service, the steps of:
identifying a set of charging elements associated with the charging function (7);
identifying a set of charging elements associated with at least one additional node or charging function (4); and
combining the identified sets of charging elements at said first mentioned charging function to obtain a set of charging elements which require to be acted upon at the first mentioned charging function during use of said service,
whereby the resulting set of charging elements define the charge information which must be collected during access of the service in order to bill the subscriber.

2. A method according to claim 1, wherein said set of charging elements associated with the first mentioned charging function define the capabilities and/or requirements of a node which is associated with the charging function and through which user call traffic or call related signalling traffic flows.

3. A method according to claim 1 or 2, wherein the first mentioned charging function is located at a node of the telecommunications system through which call related traffic passes.

4. A method according to claim 3, wherein charging information collected by the charging function in respect of a service is forwarded to a billing node of a home network or a foreign network.

5. A method according to any one of the preceding claims, wherein the at least one additional node or charging function is located at a Home Location Register (HLR), a Visitor Location Register (VLR), or a gateway node of a mobile telecommunications network.

6. A method according to claim 4 or claim 5 where dependent upon claim 4, wherein the home network and foreign networks are cellular radio telecommunications networks, and the step of identifying a set of charging elements for a charging function of the home network comprises sending the set from a Home Register of the home network to the first mentioned charging function.

7. A method according to claim 6, wherein the Home Register maintains a record of the subscribers of the home network together with respective charging element identification sets.

8. A method according to any one of the preceding claims, wherein an additional node for which a set of charging elements is identified is an access node which is located in the access network and which is responsible for enabling the subscriber to access said telecommunications service.

9. A method according to any one of the preceding claims, wherein each set of charging elements is identified by way of a binary sequence where each bit of the sequence indicates whether a charging element is set on or off.

10. A method according to claim 9, wherein the step of combining the identified sets of charging elements at said charging function comprises logically combining the respective binary sequences.

11. A method according to claim 10, wherein a logical OR operation is performed to combine sets corresponding to charging requirements, whilst a logical AND operation is performed to combine a set corresponding to a charging requirement with a set corresponding to a charging capability.

12. A method of collecting charging information at a charging function of a telecommunications system, the method comprising:
determining which charging elements should be acted upon at the charging function, for the purpose of charging a subscriber for the use of a telecommunications service, using the method of any one of the preceding claims; and
subsequently acting upon the determined elements for the said service.

13. A method according to claim 12, wherein the charging function is located within an access network, and the subscriber is a roaming subscriber making use of the access network, the method comprising sending at least some of the collected charging information to a billing node of the subscriber's home network.

14. Apparatus (7) for use in a telecommunications system to collect charging information, the charging information being collected in respect of a telecommunications service used by a subscriber, the apparatus comprising:
first processing means for identifying a set of charging elements associated with the apparatus;
second processing means for identifying a set of charging elements associated with at least one additional apparatus (4) for use in a telecommunications system to collect charging information; and
third processing means for combining the identified sets of charging elements at said apparatus, prior to the subscriber being granted access to said service, to obtain a set of charging elements which require to be acted upon at the apparatus,
whereby the resulting set of charging elements define the charge information which must be collected during access of the service in order to bill the subscriber.

15. Apparatus according to claim 14, the apparatus being configured in use to relay call related traffic.

16. Apparatus according to claim 15, the apparatus being one of a Mobile Switching Centre and a GPRS Gateway Support Node.

## Patentansprüche

1. Verfahren zur Bestimmung, welche Gebührenberechnungselemente in einer Gebührenberechnungsfunktion eines Telekommunikationssystems behandelt werden sollten, während der Nutzung eines Telekommunikationsdienstes durch einen Teilnehmer, wobei das Verfahren, bevor dem Teilnehmer Zugriff auf den Dienst gewährt wird, die folgenden Schritte umfaßt:
Identifizieren einer Menge von Gebührenberechnungselementen, die der Gebührenberechnungsfunktion (7) zugeordnet sind;
Identifizieren einer Menge von Gebührenberechnungselementen, die mindestens einem/einer zusätzlichen Knoten oder Gebührenberechnungsfunktion (4) zugeordnet sind; und
Kombinieren der identifizierten Mengen von Gebührenberechnungselementen in der erstgenannten Gebührenberechnungsfunktion, um eine Menge von Gebührenberechnungselementen, die eine Behandlung in der erstgenannten Gebührenberechnungsfunktion erfordern, während der Nutzung des Dienstes zu gewinnen,
wodurch die resultierende Menge von Gebührenberechnungselementen die Gebührenberechnungsinformation definiert, die während des Zugriffs auf den Dienst gesammelt werden muß, um dem Teilnehmer Rechnung zu stellen.

2. Verfahren nach Anspruch 1, wobei die Menge von Gebührenberechnungselementen, die der erstgenannten Gebührenberechnungsfunktion zugeordnet sind, die Fähigkeiten und/oder Anforderungen eines Knotens definiert, dem die Gebührenberechnungsfunktion zugeordnet ist und über den Teilnehmer-Rufverkehr oder rufbezogener Signalisierungsverkehr läuft.

3. Verfahren nach Anspruch 1 oder 2, wobei sich die erstgenannte Gebührenberechnungsfunktion in einem Knoten des Telekommunikationssystems befindet, über den rufbezogener Verkehr läuft.

4. Verfahren nach Anspruch 3, wobei Gebührenberechnungsinformation, die durch die Gebührenberechnungsfunktion bezüglich eines Dienstes gesammelt wird, zu einem Verrechnungsknoten eines Heimatnetzwerks oder eines fremden Netzwerks weitergeleitet wird.

5. Verfahren nach einem der vorhergehenden Ansprüche, wobei sich der/die mindestens eine zusätzliche Knoten oder Gebührenberechnungsfunktion in einer Heimatdatei (HLR), einer Besucherdatei (VLR) oder einem Gatewayknoten eines Mobilfunk-Telekommunikationnetzwerks befindet.

6. Verfahren nach Anspruch 4 oder 5, soweit abhängig von Anspruch 4, wobei das Heimatnetzwerk und die fremden Netzwerke zellulare Funktelekommunikationsnetzwerke sind und der Schritt des Identifizierens einer Menge von Gebührenberechnungselementen für eine Gebührenberechnungsfunktion des Heimatnetzwerks den folgenden Schritt umfaßt: Senden der Menge von einer Heimatdatei des Heimatnetzwerks an die erstgenannte Gebührenberechnungsfunktion.

7. Verfahren nach Anspruch 6, wobei die Heimatdatei einen Datensatz der Teilnehmer des Heimatnetzwerks zusammen mit jeweiligen Gebührenberechnungselement-Identifizierungsmengen verwaltet.

8. Verfahren nach einem der vorhergehenden Ansprüche, wobei ein zusätzlicher Knoten, für den eine Menge von Gebührenberechnungselementen identifiziert ist, ein Zugangsknoten ist, der sich im Zugangsnetzwerk befindet und der dafür zuständig ist, den Teilnehmer zu befähigen, auf den Telekommunikationsdienst zuzugreifen.

9. Verfahren nach einem der vorhergehenden Ansprüche, wobei jede Menge von Gebührenberechnungselementen mittels einer Binärfolge identifiziert wird, wo jedes Bit der Folge angibt, ob ein Gebührenberechnungselement auf ein oder aus gesetzt ist.

10. Verfahren nach Anspruch 9, wobei der Schritt des Kombinierens der identifizierten Mengen von Gebührenberechnungselementen in der Gebührenberechnungsfunktion den folgenden Schritt umfaßt: Logisches Kombinieren der jeweiligen Binärfolgen.

11. Verfahren nach Anspruch 10, wobei eine logische ODER-Verknüpfung durchgeführt wird, um Mengen zu kombinieren, die Gebührenberechnungsanforderungen entsprechen, während eine logische UND-Verknüpfung durchgeführt wird, um eine Menge, die einer Gebührenberechnungsanforderung entspricht, mit einer Menge, die einer Gebührenberechnungsfähigkeit entspricht, zu kombinieren.

12. Verfahren zur Sammlung von Gebührenberechnungsinformation in einer Gebührenberechnungsfunktion eines Telekommunikationssystem, wobei das Verfahren die folgenden Schritte umfaßt:
Bestimmen, welche Gebührenberechnungselemente in der Gebührenberechnungsfunktion behandelt werden sollten, zum Zweck der Gebührenberechnung für einen Teilnehmer für die Nutzung eines Telekommunikationsdienstes, unter Verwendung des Verfahren nach einem der vorhergehenden Ansprüche; und
anschließendes Behandeln der bestimmten Elemente für den besagten Dienst.

13. Verfahren nach Anspruch 12, wobei die Gebührenberechnungsfunktion sich in einem Zugangsnetzwerk befindet und der Teilnehmer ein Roaming-Teilnehmer ist, der vom Zugangsnetzwerk Gebrauch macht, wobei das Verfahren den folgenden Schritt umfaßt: Senden zumindest eines Teils der gesammelten Gebührenberechnungsinformation an einen Gebührenverrechnungsknoten des Heimatnetzwerks des Teilnehmers.

14. Vorrichtung (7) zur Verwendung in einem Telekommunikationssystem, um Gebührenberechnungsinformation zu sammeln, wobei die Gebührenberechnungsinformation bezüglich eines durch einen Teilnehmer genutzten Telekommunikationsdienst gesammelt wird, wobei die Vorrichtung umfaßt:
ein erstes Verarbeitungsmittel zum Identifizieren einer Menge von Gebührenberechnungselementen, die der Vorrichtung zugeordnet sind;
ein zweites Verarbeitungsmittel zum Identifizieren einer Menge von Gebührenberechnungselementen, die mindestens einer zusätzlichen Vorrichtung (4) zur Verwendung in einem Telekommunikationssystem, um Gebührenberechnungsinformation zu sammeln, zugeordnet sind; und
ein drittes Verarbeitungsmittel zum Kombinieren der identifizierten Mengen von Gebührenberechnungselementen in der Vorrichtung, bevor dem Teilnehmer Zugriff auf den Dienst gewährt wird, um eine Menge von Gebührenberechnungselementen zu gewinnen, die eine Behandlung in der Vorrichtung erfordern,
wodurch die resultierende Menge von Gebührenberechnungselementen die Gebührenberechnungsinformation definiert, die während des Zugriffs auf den Dienst gesammelt werden muß, um dem Teilnehmer Rechnung zu stellen.

15. Vorrichtung nach Anspruch 14, wobei die Vorrichtung unter Verwendung konfiguriert ist, um rufbezogenen Verkehr weiterzuleiten.

16. Vorrichtung nach Anspruch 15, wobei die Vorrichtung eine von einem Mobilvermittlungszentrum und einem Gateway-GPRS-Unterstützungsknoten ist.

## Revendications

1. Procédé visant à déterminer quels éléments d'imputation financière devraient être actionnés au niveau d'une fonction d'imputation financière d'un système de télécommunication pendant l'utilisation d'un service de télécommunication par un abonné, le procédé comprenant, avant que l'abonné ne se voie octroyer un accès audit service, les étapes de:
identification d'un jeu d'éléments d'imputation financière associés à la fonction d'imputation financière (7);
identification d'un jeu d'éléments d'imputation financière associés à au moins un noeud ou une fonction d'imputation financière additionnelle (4); et
combinaison des jeux identifiés d'éléments d'imputation financière au niveau de ladite fonction d'imputation financière mentionnée en premier pour obtenir un jeu d'éléments d'imputation financière qui doivent être actionnés au niveau de la fonction d'imputation financière mentionnée en premier pendant l'utilisation dudit service,
et ainsi, le jeu résultant d'éléments d'imputation financière définit l'information d'imputation financière qui doit être collectée pendant un accès au service afin de facturer l'abonné.

2. Procédé selon la revendication 1, dans lequel ledit jeu d'éléments d'imputation financière associé à la fonction d'imputation financière mentionnée en premier définit les capacités et/ou les exigences d'un noeud qui est associé à la fonction d'imputation financière et par l'intermédiaire duquel un trafic d'appel d'utilisateur ou un trafic de signalisation rapporté à un appel circule.

3. Procédé selon la revendication 1 ou 2, dans lequel la fonction d'imputation financière mentionnée en premier est localisée au niveau d'un noeud du système de télécommunication par l'intermédiaire duquel un trafic rapporté à un appel passe.

4. Procédé selon la revendication 3, dans lequel l'information d'imputation financière collectée par la fonction d'imputation financière en relation avec un service est renvoyée sur un noeud de facturation d'un réseau domestique ou d'un réseau étranger.

5. Procédé selon l'une quelconque des revendications précédentes, dans lequel le au moins un noeud ou une fonction d'imputation financière additionnelle est localisé(e) au niveau d'un registre de localisation domestique (HLR), d'un registre de localisation de visiteur (VLR) ou d'un noeud de passerelle d'un réseau de télécommunication mobile.

6. Procédé selon la revendication 4 ou 5 lorsqu'elle dépend de la revendication 4, dans lequel le réseau domestique et les réseaux étrangers sont des réseaux de télécommunication radio cellulaires et l'étape d'identification d'un jeu d'éléments d'imputation financière pour une fonction d'imputation financière du réseau domestique comprend l'envoi du jeu depuis un registre domestique du réseau domestique sur la fonction d'imputation financière mentionnée en premier.

7. Procédé selon la revendication 6, dans lequel le registre domestique maintient un enregistrement des abonnés du réseau domestique en association avec des jeux d'identification d'éléments d'imputation financière respectifs.

8. Procédé selon l'une quelconque des revendications précédentes, dans lequel un noeud additionnel pour lequel un jeu des éléments d'imputation financière est identifié est un noeud d'accès qui est localisé dans le réseau d'accès et qui est compétent pour autoriser l'abonné à accéder audit service de télécommunication.

9. Procédé selon l'une quelconque des revendications précédentes, dans lequel chaque jeu d'éléments d'imputation financière est identifié au moyen d'une séquence binaire où chaque bit de la séquence indique si un élément d'imputation financière est établi dans l'état d'activation ou dans l'état de désactivation.

10. Procédé selon la revendication 9, dans lequel l'étape de combinaison des jeux identifiés d'éléments d'imputation financière au niveau de ladite fonction d'imputation financière comprend la combinaison logique des séquences binaires respectives.

11. Procédé selon la revendication 10, dans lequel une opération OU logique est réalisée pour combiner les jeux correspondant à des exigences d'imputation financière tandis qu'une opération ET logique est réalisée pour combiner un jeu correspondant à une exigence d'imputation financière avec un jeu correspondant à une capacité d'imputation financière.

12. Procédé de collecte d'une information d'imputation financière au niveau d'une fonction d'imputation financière d'un système de télécommunication, le procédé comprenant:
la détermination des éléments d'imputation financière qui devraient être actionnés au niveau de la fonction d'imputation financière dans le but d'imputer financièrement un abonné pour l'utilisation d'un service de télécommunication, en utilisant le procédé selon l'une quelconque des revendications précédentes; et
ensuite, l'action sur les éléments déterminés pour ledit service.

13. Procédé selon la revendication 12, dans lequel la fonction d'imputation financière est localisée à l'intérieur d'un réseau d'accès et l'abonné est un abonné en roaming qui réalise une utilisation du réseau d'accès, le procédé comprenant l'envoi d'au moins une partie de l'information d'imputation financière collectée sur un noeud de facturation du réseau domestique de l'abonné.

14. Appareil (7) pour une utilisation dans un système de télécommunication pour collecter une information d'imputation financière, l'information d'imputation financière étant collectée en relation avec un service de télécommunication utilisé par un abonné, l'appareil comprenant:
un premier moyen de traitement pour identifier un jeu d'éléments d'imputation financière associés à l'appareil;
un second moyen de traitement pour identifier un jeu d'éléments d'imputation financière associés à au moins un appareil additionnel (4) pour une utilisation dans un système de télécommunication pour collecter une information d'imputation financière; et
un troisième moyen de traitement pour combiner les jeux identifiés d'éléments d'imputation financière au niveau dudit appareil, avant que l'abonné ne se voie octroyer un accès audit service, afin d'obtenir un jeu d'éléments d'imputation financière qu'il convient d'actionner au niveau de l'appareil,
par le biais duquel le jeu résultant d'éléments d'imputation financière définit l'information d'imputation financière qui doit être collectée pendant un accès au service afin de facturer l'abonné.

15. Appareil selon la revendication 14, l'appareil étant configuré pendant l'utilisation pour transférer le trafic rapporté à un appel.

16. Appareil selon la revendication 15, l'appareil étant l'un d'un Centre de commutation mobile et d'un noeud de support GPRS de passerelle.
